# EUROPÄISCHE PATENTANMELDUNG

(11) **EP 2 468 925 A2**
(43) Veröffentlichungstag der Anmeldung: **27.06.2012**
(21) Anmeldenummer: 11193411.3
(22) Anmeldetag: 14.12.2011
(51) Int. Cl.: C23C 28/00, C23C 14/08, C23C 4/12, C23C 28/04

(54) **Verfahren zur Herstellung eines Wärmedämmschichtaufbaus**

(30) Priorität: 21.12.2010 EP 10196146
(71) Anmelder: Sulzer Metco AG, 5610 Wohlen (CH)
(72) Erfinder: von Niessen, Konstantin, 5632 Buttwil (CH); Schmid, Richard K., 8500 Gerlikon (CH)
(74) Vertreter: Sulzer Management AG

(57) **Zusammenfassung**

In dem vorgestellten Verfahren zur Herstellung eines Wärmedämmschichtaufbaus (2) auf einer Substratoberfläche (3) wird mittels Plasmaspritzen ein keramisches Beschichtungsmaterial auf die Substratoberfläche aufgebracht, wobei der Wärmedämmschichtaufbau mindestens zwei unterschiedlich hergestellte Wärmedämmschichten (2.1, 2.2) enthält. Zur Herstellung der einen Wärmedämmschicht (2.1) wird das Beschichtungsmaterial durch Plasmaspritzen bei Atmosphärendruck (Atmospheric Plasma Spraying oder kurz APS) in Form eines Pulverstrahls auf die Substratoberfläche aufgespritzt wird, und zur Herstellung der anderen Wärmedämmschicht (2.2) das Beschichtungsmaterial mittels Plasma Spraying - Physical Vapour Deposition oder kurz PS-PVD derart auf die Substratoberfläche aufgebracht, dass auf der Substratoberfläche eine Schicht mit länglichen Korpuskeln entsteht, die eine anisotrope Mikrostruktur bilden, und die im wesentlichen senkrecht zur Substratoberfläche ausgerichtet sind.

## Beschreibung

Die Erfindung betrifft ein Verfahren zur Herstellung eines Wärmedämmaufbaus auf einer Substratoberfläche gemäss Oberbegriff von Anspruch 1 und ein Substrat oder Werkstück umfassend eine Substratoberfläche mit einem derart hergestellten Wärmedämmschichtaufbau.

In Maschinen und Prozessen werden Wärmedämmschichtsysteme eingesetzt, um thermisch stark beanspruchte Teile gegen die Einwirkung von Hitze, Heissgaskorrosion und Erosion zu schützen. Häufig ist eine Steigerung des Wirkungsgrades von Maschinen und Prozessen nur mit einer Erhöhung der Prozesstemperatur möglich, so dass exponierte Teile entsprechend geschützt werden müssen. So werden beispielsweise Turbinenschaufeln oder Teile der Brennkammern in Flugzeugtriebwerken und stationären Gasturbinen normalerweise mit einem ein- oder mehrlagigen Wärmedämmschichtsystem versehen, um die Turbinenschaufeln beziehungsweise Teile der Brennkammern gegen die Einwirkung der hohen Prozesstemperaturen zu schützen und die Wartungsintervalle und Lebensdauer zu verlängern.

Ein Wärmedämmschichtsystem kann abhängig von der Anwendung eine oder mehrere Schichten enthalten, beispielsweise eine Sperrschicht, insbesondere Diffusionssperrschicht, eine Haftvermittlungsschicht, eine Heissgaskorrosionsschutzschicht, eine Schutzschicht, eine Wärmedämmschicht und/oder eine Deckschicht. Im Beispiel der oben erwähnten Turbinenschaufeln ist das Substrat meist aus einer Ni- oder Co-Legierung hergestellt. Das auf der Turbinenschaufel aufgebrachte Wärmedämmschichtsystem kann zum Beispiel in aufsteigender Reihenfolge folgende Schichten enthalten:
- eine metallische Sperrschicht, zum Beispiel aus NiAl- oder NiCr- Phasen oder Legierungen,
- eine metallische Haftvermittlungsschicht, die auch als Heissgaskorrosionsschutzschicht dient, und die zum Beispiel mindestens teilweise aus einem Metallaluminid oder aus einer MCrAlY-Legierung hergestellt sein kann, wobei M eines der Metalle Fe, Ni oder Co oder eine Kombination von Ni und Co bedeutet,
- eine oxidkeramische Schutzschicht, zum Beispiel aus Al₂O₃ oder aus anderen Oxiden,
- eine oxidkeramische Wärmedämmschicht, zum Beispiel aus stabilisiertem Zirkonoxid, und
- eine oxidkeramische Glättungs- oder Deckschicht, zum Beispiel aus stabilisiertem Zirkonoxid oder SiO₂.

Die oxidkeramische Wärmedämmschicht hat das Problem, dass sie aufgrund von wiederholt auftretenden Temperaturänderungen zur Ausbildung von Rissen neigen kann, welche das Absplittern der Wärmedämmschicht begünstigen. Bei der Einführung von Wärmedämmschichtsystemen auf thermisch stark beanspruchten Substraten war die Lebensdauer der oxidkeramischen Wärmedämmschicht deshalb häufig unbefriedigend.

Aus der Patentschrift US 5 238 752 ist ein Wärmedämmschichtsystem bekannt, das eine intermetallische Haftvermittlerschicht und eine keramische Wärmedämmschicht enthält, die eine kolumnare Korn- oder Mikrostruktur aufweist. Die kolumnare Mikrostruktur wird gemäss US 5 238 752 mittels eines Aufdampfverfahrens erzeugt, das als Electron Beam - Physical Vapor Deposition oder kurz EB-PVD-Verfahren bekannt ist. Die derart erzeugte Wärmedämmschicht hat eine beträchtlich verlängerte Lebensdauer im Vergleich mit der Lebensdauer einer Wärmedämmschicht, die keine kolumnare Mikrostruktur aufweist.

Die in US 5 238 752 beschriebene Herstellung eines Wärmedämmschichtaufbaus hat den Nachteil, dass die Anlagekosten für das Aufbringen der Wärmedämmschicht mittels EB-PVD vergleichsweise hoch sind, und dass EB-PVD keinen "Non Line Of Sight" (NLOS)-Auftrag der Wärmedämmschicht erlaubt, während es zum Beispiel beim Low Pressure Plasma Spraying (LPPS) möglich ist, auch Teile des Substrats zu beschichten, die hinter einer Kante liegen und vom Plasmabrenner aus nicht sichtbar sind.

Das Dokument WO 03/087422 A1 offenbart ein Low Pressure Plasma Spraying-Dünnfilmverfahren, mit welchem ebenfalls Wärmedämmschichten mit kolumnarer Mikrostruktur erzeugt werden können. Die mit diesem Verfahren erzeugten Wärmedämmschichten reagieren auf wiederholt auftretende Temperaturänderungen auf eine weitgehend reversible Weise, d.h. ohne Ausbildung von Rissen, so dass ihre Lebensdauer ebenfalls beträchtlich verlängert ist im Vergleich mit der Lebensdauer von Wärmedämmschichten, die keine kolumnare Mikrostruktur aufweisen.

Das in WO 03/087422 A1 beschriebenen Plasmaspritzverfahren zum Herstellen von Wärmedämmschichten mit kolumnarer Struktur wird im Zusammenhang mit LPPS-Dünnfilm-Verfahren erwähnt, da es wie dieselben einen breiten Plasmastrahl verwendet, der durch die Druckdifferenz zwischen dem Druck im Innern des Plasmabrenners von typisch 100 kPa und dem Druck in der Arbeitskammer von weniger als 10kPa entsteht. Da die mit dem beschriebenen Verfahren erzeugten Wärmedämmschichten jedoch bis zu 1 mm dick oder dicker sein können und damit kaum unter den Begriff "Dünnfilm" fallen, wird das beschriebene Verfahren im Folgenden als Plasma Spray - Physical Vapor Deposition-Verfahren oder kurz PS-PVD-Verfahren bezeichnet.

Die oben beschriebenen Herstellungsverfahren für Wärmedämmschichten mit kolumnarer Mikrostruktur haben jedoch den Nachteil, dass für Wärmedämmschichten von 250 µm oder dicker die Herstellung vergleichsweise langsam ist. Die Herstellung von Wärmedämmschichten mit kolumnarer Mikrostruktur ist deshalb wesentlich aufwändiger als die Herstellung von Wärmedämmschichten ohne eine derartige Mikrostruktur. Aufgabe der Erfindung ist es, ein Verfahren zur Herstellung eines Wärmedämmschichtaufbaus auf einer Substratoberfläche zur Verfügung zu stellen, das es erlaubt, den Aufwand für die Herstellung des Wärmedämmschichtaufbaus gegenüber einer gleich dicken herkömmlichen Wärmedämmschicht mit kolumnarer Mikrostruktur zu senken, ohne dadurch die Temperaturwechselbeständigkeit des gesamten Wärmedämmschichtsystems zu verschlechtern. Eine weitere Aufgabe der Erfindung besteht darin, ein Substrat oder Werkstück umfassend eine Substratoberfläche mit einem derartigen Wärmedämmschichtaufbau zur Verfügung zu stellen.

Diese Aufgaben werden erfindungsgemäss durch das in Anspruch 1 definierte Verfahren und das in Anspruch 10 definierte Substrat oder Werkstück gelöst.

In dem erfindungsgemässe Verfahren zur Herstellung eines Wärmedämmschichtaufbaus auf einer Substratoberfläche wird mittels Plasmaspritzen ein keramisches Beschichtungsmaterial auf die Substratoberfläche aufgebracht, wobei der Wärmedämmschichtaufbau mindestens zwei unterschiedlich hergestellten Wärmedämmschichten enthält. Zur Herstellung der einen Wärmedämmschicht wird das Beschichtungsmaterial durch Plasmaspritzen bei Atmosphärendruck (Atmospheric Plasma Spraying oder kurz APS) in Form eines Pulverstrahls auf die Substratoberfläche aufgespritzt. Zur Herstellung der anderen Wärmedämmschicht wird das Beschichtungsmaterial in einer Arbeitskammer bei einem Druck von weniger als 2000 Pa mittels Plasma Spraying - Physical Vapour Deposition oder kurz PS-PVD auf die Substratoberfläche aufgebracht, wobei das Beschichtungsmaterial als Pulver in ein den Pulverstrahl defokussierendes Plasma injiziert und dort teilweise oder vollständig verdampft wird, indem beispielsweise ein Plasma mit ausreichend hoher spezifischer Enthalpie erzeugt wird und typisch ein Anteil von mindestens 10 oder mindestens 20 Gewichtsprozent des Beschichtungspulvers in die Dampfphase übergeht, so dass auf der Substratoberfläche eine Schicht mit länglichen Korpuskeln entsteht, die eine anisotrope Mikrostruktur bilden, und die im wesentlichen senkrecht zur Substratoberfläche ausgerichtet sind. Eine derartige Mikrostruktur wird auch als kolumnare Mikrostruktur bezeichnet. Die mittels APS aufgespritzte Wärmedämmschicht kann beispielsweise eine Dicke von 20 µm bis 1000 µm oder 50 µm bis 800 µm oder 100 µm bis 600 µm aufweisen und in einer- oder mehreren Lagen aufgespritzt werden. Die mittels PS-PVD aufgebrachte Wärmedämmschicht kann eine Dicke von 20 µm bis 1000 µm oder 50 µm bis 800 µm oder 100 µm bis 600 µm aufweisen und wird vorteilhafterweise in einer oder mehreren Lagen aufgebracht.

Im Fall von mehren Lagen können die einzelnen Lagen der mittels APS aufgespritzten Wärmedämmschicht und/oder der mittels PS-PVD aufgebrachten Wärmedämmschicht jeweils eine Dicke von 3 µm bis 20 µm, insbesondere jeweils eine Dicke von 4 µm bis 12 µm haben.

Vorteilhafterweise wird auf der Substratoberfläche eine Abfolge von einer oder mehreren mittels APS aufgespritzten Wärmedämmschichten und einer oder mehreren mittels PS-PVD aufgebrachten Wärmedämmschichten erzeugt.

In einer vorteilhaften Ausführungsvariante wird als erste Wärmedämmschicht auf der Substratoberfläche eine mittels APS aufgespritzte Wärmedämmschicht aufgebracht wird, und/oder es wird als oberste Wärmedämmschicht eine mittels APS aufgespritzte Wärmedämmschicht aufgebracht.

In einer vorteilhaften Ausführungsform des Verfahrens enthält das keramische Beschichtungsmaterial zur Herstellung der Wärmedämmschichten oxidkeramische Komponenten, wobei das keramische Beschichtungsmaterial beispielsweise aus stabilisiertem Zirkonoxid, insbesondere mit Yttrium, Cer, Gadolinium, Dysprosium oder anderen Seltenerden stabilisiertem Zirkonoxid, bestehen kann und/oder stabilisiertes Zirkonoxid, insbesondere mit Yttrium, Cer, Gadolinium, Dysprosium oder anderen Seltenerden stabilisiertes Zirkonoxid, als Bestandteil enthalten kann.

In einer weiteren vorteilhaften Ausführungsform des Verfahrens werden zusätzlich eine oder mehrere der folgenden Funktionsschichten aufgebracht:
- vor dem Aufbringen der Wärmedämmschichten eine metallische Sperrschicht von 2 µm bis 30 µm Dicke, insbesondere eine intermetallische Sperrschicht aus einer NiAl- oder NiCr- oder PtAl- oder PtNi-Legierung,
- vor dem Aufbringen der Wärmedämmschichten eine Haftvermittlerschicht und/oder Heissgaskorrosionsschutzschicht, insbesondere eine Schicht 50 µm bis 500 µm Dicke aus einer Legierung des Typs MCrAlY mit M = Fe, Co, Ni oder NiCo,
- vor dem Aufbringen der Wärmedämmschichten eine Schutzschicht von 0.02 µm bis 20 µm oder 0.03 µm bis 3 µm Dicke, insbesondere eine Schutzschicht aus Al₂O₃ oder einer ternären Al-Zr-O-Verbindung,
- nach dem Aufbringen der Wärmedämmschichten eine Glättungsschicht, insbesondere eine Glättungsschicht von 2 µm bis 50 µm Dicke aus oxidkeramischem Beschichtungsmaterial und/oder aus dem gleichen Beschichtungsmaterial wie die Wärmedämmschichten.

Vorteilhafterweise werden zur Herstellung des Wärmedämmschichtaufbaus mindestens zwei Plasmaspritzanlagen zur Verfügung gestellt, eine Anlage zum Aufspritzten von Wärmedämmschichten mittels APS und eine Anlage zum Aufbringen von Wärmedämmschichten mittels PS-PVD.

Weiter umfasst die Erfindung ein Substrat oder Werkstück umfassend eine Substratoberfläche mit einem Wärmedämmschichtaufbau, welcher mit einem Verfahren nach einem oder mehreren der oben beschriebenen Ausführungsformen und -varianten hergestellt ist, wobei der Wärmedämmschichtaufbau mindestens zwei unterschiedlich hergestellte Wärmedämmschichten enthält, nämlich eine mittels APS aufgespritzte Wärmedämmschicht und eine mittels PS-PVD aufgebracht Wärmedämmschicht, wobei die mittels PS-PVD aufgebrachte Wärmedämmschicht länglichen Korpuskeln enthält, die eine anisotrope Mikrostruktur bilden, und die im wesentlichen senkrecht zur Substratoberfläche ausgerichtet sind.

Das Verfahren zur Herstellung eines Wärmedämmschichtaufbaus auf einer Substratoberfläche gemäss vorliegender Erfindung und das Substrat oder Werkstück mit einem derartigen Wärmedämmschichtaufbau haben den Vorteil, dass dank der Verwendung von APS zum Aufspritzen eines Teils des Wärmedämmschichtaufbaus der Aufwand für die Herstellung desselben gegenüber herkömmlichen, ausschliesslich mit PS-PVD hergestellten Wärmedämmschichten gleicher Dicke gesenkt werden kann, ohne die Temperaturwechselbeständigkeit des gesamten Wärmedämmschichtsystems zu beeinträchtigen.

Die obige Beschreibung von Ausführungsformen und -varianten dient lediglich als Beispiel. Weitere vorteilhafte Ausführungsformen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen:
- Fig. 1: ein Ausführungsbeispiel eines Wärmedämmschichtaufbaus hergestellt gemäss vorliegender Erfindung, und
- Fig. 2: ein Ausführungsbeispiel eines Wärmedämmschichtsystems mit einem Wärmedämmschichtaufbau hergestellt gemäss vorliegender Erfindung.

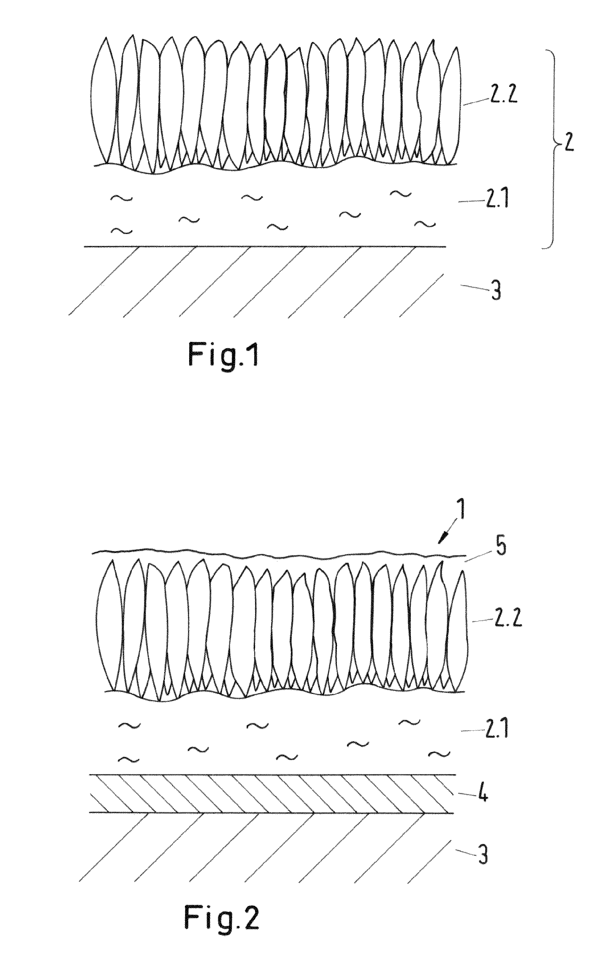

Ein Ausführungsbeispiel des erfindungsgemässen Verfahrens zur Herstellung eines Wärmedämmschichtaufbaus 2 auf einer Substratoberfläche 3 wird im Folgenden an Hand der Figur 1 beschrieben. In dem Verfahren wird mittels Plasmaspritzen ein keramisches Beschichtungsmaterial auf die Substratoberfläche aufgebracht, wobei der Wärmedämmschichtaufbau 2 mindestens zwei unterschiedlich hergestellten Wärmedämmschichten 2.1, 2.2 enthält. Zur Herstellung der einen Wärmedämmschicht 2.1 wird das Beschichtungsmaterial durch Plasmaspritzen bei Atmosphärendruck (Atmospheric Plasma Spraying oder kurz APS) in Form eines Pulverstrahls auf die Substratoberfläche aufgespritzt wird. Zur Herstellung der anderen Wärmedämmschicht 2.2 wird das Beschichtungsmaterial in einer Arbeitskammer bei einem Druck von weniger als 2000 Pa mittels Plasma Spraying - Physical Vapour Deposition oder kurz PS-PVD auf die Substratoberfläche aufgebracht wird, wobei das Beschichtungsmaterial als Pulver in ein den Pulverstrahl defokussierendes Plasma injiziert und dort teilweise oder vollständig verdampft wird, indem beispielsweise ein Plasma mit ausreichend hoher spezifischer Enthalpie erzeugt wird und ein Anteil von mindestens 10 oder mindestens 20 Gewichtsprozent des Beschichtungspulvers in die Dampfphase übergeht, so dass auf der Substratoberfläche eine Schicht mit länglichen Korpuskeln entsteht, die eine anisotrope Mikrostruktur bilden, und die im wesentlichen senkrecht zur Substratoberfläche ausgerichtet sind. Eine derartige Mikrostruktur wird auch als kolumnare Mikrostruktur bezeichnet.

Zur Herstellung der APS-Wärmedämmschicht 2.1 kann eine Plasmaspritzanlage zum atmosphärischen Plasmaspritzen mit einem Plasmabrenner verwendet werden, beispielsweise einem DC-Plasmabrenner des Typs 9MB der Firma Sulzer Metco. Die dem Plasmabrenner während dem Plasmaspritzen zugeführte elektrische Leistung beträgt typisch 40 kW bis 80 kW. Als Plasmagas kann ein Gemisch von Ar und wahlweise He und/oder H₂ verwendet werden, z.B. Ar mit 30 % bis 40 % He oder H₂.

Zur Herstellung der PS-PVD Wärmedämmschicht 2.2 wird zweckmässigerweise eine Plasmabeschichtungsanlage eingesetzt, die eine Arbeitskammer mit einem Plasmabrenner zur Erzeugung eines Plasmastrahls, eine Pumpvorrichtung, die mit der Arbeitskammer verbunden ist, um den Druck in der Arbeitskammer auf 2000 Pa oder weniger abzusenken, und einen Substrathalter zum Halten des Substrates umfasst. Der Plasmabrenner, der zum Beispiel als DC-Plasmabrenner ausgebildet sein kann, hat vorteilhafterweise eine zugeführte elektrische Leistung von wenigstens 60 kW, 80 kW oder 100 kW, um ein Plasma mit genügend hoher spezifischer Enthalpie zu erzeugen, so dass Wärmedämmschichten mit kolumnarer Mikrostruktur hergestellt werden können. Bei Bedarf kann die Plasmabeschichtungsanlage zusätzlich eine oder mehrere Injektionsvorrichtungen umfassen, um eine oder mehrere Komponenten in fester, flüssiger und/oder gasförmiger Form in das Plasma oder in den Plasmastrahl zu injizieren.

Typischerweise ist der Plasmabrenner zur Herstellung der PS-PVD Wärmedämmschicht mit einer Stromversorgung, zum Beispiel einer Gleichstromversorgung für einen DC-Plasmabrenner, und/oder mit einer Kühlvorrichtung und/oder mit einer Plasmagasversorgung verbunden und fallweise mit einer Versorgung für flüssige und/oder gasförmige reaktive Komponenten und/oder einer Fördervorrichtung für Spritzpulver oder Suspensionen. Das Prozess- oder Plasmagas kann beispielsweise Argon, Stickstoff, Helium und/oder Wasserstoff oder eine Mischung eines Edelgases mit Stickstoff und/oder Wasserstoff enthalten beziehungsweise aus einem oder mehreren dieser Gase bestehen.

Vorteilhafterweise ist der Substrathalter als verschiebbarer Stabhalter ausgeführt, um das Substrat aus einer Vorkammer durch eine Dichtungsschleuse in die Arbeitskammer zu bewegen. Der Stabhalter ermöglicht zusätzlich, das Substrat falls erforderlich während der Behandlung und/oder Beschichtung zu drehen.

Weiter kann die Plasmabeschichtungsanlage zur Herstellung der PS-PVD Wärmedämmschicht zusätzlich eine gesteuerte Verstellvorrichtung für den Plasmabrenner umfassen, um die Richtung des Plasmastrahls und/oder den Abstand des Plasmabrenners von der Substratoberfläche 3 zu steuern, beispielsweise in einem Bereich von 0.2 m bis 2 m oder 0.3 m bis 1.2 m. Fallweise können in der Verstellvorrichtung eine oder mehrere Schwenkachsen vorgesehen sein, um Schwenkbewegungen auszuführen. Darüber hinaus kann die Verstellvorrichtung auch zusätzliche lineare Verstellachsen umfassen, um den Plasmabrenner über unterschiedlichen Bereichen der Substratoberfläche 3 anzuordnen. Lineare Bewegungen und Schwenkbewegungen des Plasmabrenners erlauben eine Steuerung der Substratbehandlung und -beschichtung, beispielsweise um eine Substratoberfläche gleichmässig vorzuheizen, oder um auf der Substratoberfläche eine gleichmässige Schichtdicke und/oder Schichtqualität zu erzielen.

Die mittels APS aufgespritzte Wärmedämmschicht 2.1 kann beispielsweise eine Dicke von 20 µm bis 1000 µm oder 50 µm bis 800 µm oder 100 µm bis 600 µm aufweisen und in einer- oder mehreren Lagen aufgespritzt werden. Die mittels PS-PVD aufgebrachte Wärmedämmschicht 2.2 kann eine Dicke von 20 µm bis 1000 µm oder 50 µm bis 800 µm oder 100 µm bis 600 µm aufweisen und wird vorteilhafterweise in mehreren Lagen aufgebracht.

Im Fall von mehren Lagen können die einzelnen Lagen der mittels APS aufgespritzten Wärmedämmschicht 2.1 und/oder der mittels PS-PVD aufgebrachten Wärmedämmschicht 2.2 jeweils eine Dicke von 3 µm bis 20 µm, insbesondere jeweils eine Dicke von 4 µm bis 12 µm haben.

Vorteilhafterweise wird auf der Substratoberfläche 3 eine Abfolge von einer oder mehreren mittels APS aufgespritzten Wärmedämmschichten und einer oder mehreren mittels PS-PVD aufgebrachten Wärmedämmschichten erzeugt.

In einer vorteilhaften Ausführungsvariante wird als erste Wärmedämmschicht auf der Substratoberfläche 3 eine mittels APS aufgespritzte Wärmedämmschicht aufgebracht wird, und/oder es wird als oberste Wärmedämmschicht eine mittels APS aufgespritzte Wärmedämmschicht aufgebracht.

In einer vorteilhaften Ausführungsform des Verfahrens enthält das keramische Beschichtungsmaterial zur Herstellung der Wärmedämmschichten 2.1, 2.2 oxidkeramische Komponenten, wobei das keramische Beschichtungsmaterial beispielsweise aus stabilisiertem Zirkonoxid, insbesondere mit Yttrium, Cer, Gadolinium, Dysprosium oder anderen Seltenerden stabilisiertem Zirkonoxid, bestehen kann und/oder stabilisiertes Zirkonoxid, insbesondere mit Yttrium, Cer, Gadolinium, Dysprosium oder anderen Seltenerden stabilisiertes Zirkonoxid, als Bestandteil enthalten kann, wobei im Fall von Yttrium stabilisiertem Zirkonoxid der Yttriumoxid-Anteil typisch 5 bis 20 Gew.-% beträgt.

Damit während der Herstellung der PS-PVD Wärmedämmschicht 2.2 der Pulverstrahl durch das defokussierende Plasma in eine Wolke aus Dampf umgeformt wird, aus der sich eine Schicht mit der angestrebten kolumnaren Struktur ergibt, muss das pulverförmige Ausgangsmaterial sehr feinkörnig sein. Die Grössenverteilung des Ausgangsmaterials liegt mit Vorteil zu einem wesentlichen Teil im Bereich zwischen 1 µm und 50 µm, vorzugsweise zwischen 1 µm und 25 µm.

In einem weiteren Ausführungsbeispiel des erfindungsgemässen Verfahrens zur Herstellung eines Wärmedämmschichtaufbaus auf einer Substratoberfläche 3 werden zusätzlich zu den Wärmedämmschichten eine oder mehrere Funktionsschichten aufgebracht. Das Ausführungsbeispiel wird im Folgenden an Hand der Figur 2 beschrieben. In diesem Ausführungsbeispiel wird mittels Plasmaspritzen ein keramisches Beschichtungsmaterial auf die Substratoberfläche aufgebracht, wobei der Wärmedämmschichtaufbau mindestens zwei unterschiedlich hergestellten Wärmedämmschichten 2.1, 2.2 enthält. Zur Herstellung der einen Wärmedämmschicht 2.1 wird das Beschichtungsmaterial durch Plasmaspritzen bei Atmosphärendruck (Atmospheric Plasma Spraying oder kurz APS) in Form eines Pulverstrahls auf die Substratoberfläche aufgespritzt wird. Zur Herstellung der anderen Wärmedämmschicht 2.2 wird das Beschichtungsmaterial in einer Arbeitskammer bei einem Druck von weniger als 2000 Pa mittels Plasma Spraying - Physical Vapour Deposition oder kurz PS-PVD auf die Substratoberfläche aufgebracht wird, wobei das Beschichtungsmaterial als Pulver in ein den Pulverstrahl defokussierendes Plasma injiziert und dort teilweise oder vollständig verdampft wird, indem beispielsweise ein Plasma mit ausreichend hoher spezifischer Enthalpie erzeugt wird und ein Anteil von mindestens 10 oder mindestens 20 Gewichtsprozent des Beschichtungspulvers in die Dampfphase übergeht, so dass auf der Substratoberfläche eine Schicht mit länglichen Korpuskeln entsteht, die eine anisotrope Mikrostruktur bilden, und die im wesentlichen senkrecht zur Substratoberfläche ausgerichtet sind.

Mögliche Ausführungsformen und -varianten sowie genauere Angaben zur Herstellung der Wärmedämmschichten können der oben stehenden Beschreibung des ersten Ausführungsbeispiels entnommen werden, das an Hand der Figur 1 erläutert wurde.

Im vorliegenden Ausführungsbeispiel werden zusätzlich zu den Wärmedämmschichten eine oder mehrere der folgenden Funktionsschichten aufgebracht:
- vor dem Aufbringen der Wärmedämmschichten eine metallische Sperrschicht von 2 µm bis 30 µm Dicke, insbesondere eine intermetallische Sperrschicht aus einer NiAl- oder NiCr- oder PtAl- oder PtNi-Legierung,
- vor dem Aufbringen der Wärmedämmschichten eine Haftvermittlerschicht und/oder Heissgaskorrosionsschutzschicht 4, insbesondere eine Schicht 50 µm bis 500 µm Dicke aus einer Legierung des Typs MCrAlY mit M = Fe, Co, Ni oder NiCo,
- vor dem Aufbringen der Wärmedämmschichten eine Schutzschicht von 0.02 µm bis 20 µm oder 0.03 µm bis 3 µm Dicke, insbesondere eine Schutzschicht aus Al₂O₃ oder einer ternären Al-Zr-O-Verbindung,
- nach dem Aufbringen der Wärmedämmschichten eine Glättungsschicht 5, insbesondere eine Glättungsschicht von 2 µm bis 50 µm Dicke aus oxidkeramischem Beschichtungsmaterial und/oder aus dem gleichen Beschichtungsmaterial wie die Wärmedämmschichten.

Die Wärmedämmschichten 2.1, 2.2 zusammen mit den oben erwähnten Funktionsschichten werden auch als Wärmedämmschichtsystem 1 bezeichnet.

Die erwähnte metallische Sperrschicht ist von Vorteil, wenn die Substratoberfläche nicht durch eine Legierung auf der Basis von NiAl gebildet wird. Die metallische Sperrschicht wird in diesem Fall meist direkt auf die Substartoberfläche 3 aufgebracht werden und dient dazu, eine vorzeitige Degradation der anschliessend aufgebrachten Haftvermittlerschicht bzw. Heissgaskorrosionsschutzschicht 4 zu verhindern.

Typisch wird zusätzlich, wie oben erwähnt, auf der Haftvermittlerschicht bzw. Heissgaskorrosionsschutzschicht 4 eine Schutzschicht aufgebracht, die zweckmässigerweise als Oxidschicht ausgebildet ist. Die Oxidschicht kann beispielsweise in der Arbeitskammer der Plasmabeschichtungsanlage erzeugt werden, die zur Herstellung der PS-PVD Wärmedämmschicht 2.2 eingesetzt wird. Die Oxidschicht kann zum Beispiel thermisch erzeugt werden, indem die Substratoberfläche zum Beispiel durch den Plasmastrahl erwärmt wird, wobei die Arbeitskammer während der Erzeugung der Oxidschicht Sauerstoff oder ein Sauerstoff enthaltendes Gas enthält.

Mit Vorteil weist die als Schutzschicht verwendete Oxidschicht eine Porosität von weniger als 2 % oder weniger als 0.5 % oder weniger als 0.1 % auf, indem beispielsweise die Schutzschicht im Wesentlichen aus Al₂O₃ gebildet wird.

Bei Bedarf können die oben erwähnte Sperrschicht und/oder die Haftvermittlerschicht bzw. Heissgaskorrosionsschutzschicht 4 und/oder die Schutzschicht in der Arbeitskammer der Plasmabeschichtungsanlage erzeugt werden, die zur Herstellung der PS-PVD Wärmedämmschicht 2.2 eingesetzt wird.

In einer weiteren vorteilhaften Ausführungsform werden die Richtung des Plasmastrahls und/oder der Abstand des Plasmabrenners vom Substrat gesteuert. So kann der Plasmastrahl beispielsweise beim Erwärmen der Substratoberfläche und/oder Erzeugen der Oxidschicht und/oder beim Aufbringen der Wärmedämmschichten 2.1, 2.1 über die Substratoberfläche geführt werden, um eine gleichmässige Behandlung oder Beschichtung zu erzielen, und um mögliche lokale Erwärmungen und/oder Beschädigungen der Substratoberfläche beziehungsweise des Substrates zu vermeiden, die bei einem konstant ausgerichteten Plasmastrahl bei hoher Strahlleistung entstehen können.

Vor dem Aufbringen und/oder Erzeugen der in den oben stehenden Ausführungsformen und -varianten beschriebenen Schichten wird das Substrat und/oder die Substratoberfläche 3 normalerweise vorgeheizt, um die Haftung der Schichten zu verbessern. Das Vorheizen des Substrats kann mittels Plasmastrahl erfolgen, wobei es normalerweise genügt, den Plasmastrahl, der zum Vorheizen weder Beschichtungspulver noch reaktive Komponenten enthält, mit einigen Schwenkbewegungen über das Substrat zu führen. Typisch reichen 20 bis 30 Schwenkbewegungen aus, um die Substratoberfläche 3 auf eine Temperatur von 800 °C bis 1300 °C zu erwärmen.

Ungeachtet des verwendeten Plasmaspritzverfahrens kann es vorteilhaft sein, eine zusätzliche Wärmequelle zu verwenden, um das Aufbringen und/oder Erzeugen der in den oben stehenden Ausführungsformen und -varianten beschriebenen Wärmedämmschichten und Funktionsschichten innerhalb eines vorgegebenen Temperaturbereichs durchzuführen. Die Temperatur wird zweckmässigerweise im Bereich zwischen 800 and 1300°C vorgegeben, vorzugsweise im Temperaturbereich > 1000°C. Als zusätzliche Wärmequelle kann beispielsweise eine Infrarotlampe und/oder ein Plasmastrahl und/oder ein Plasma verwendet werden. Dabei werden die Wärmezufuhr der Wärmequelle und/oder die Temperatur des zu beschichtenden Substrats gesteuert oder geregelt.

Vorteilhafterweise werden zur Herstellung des Wärmedämmschichtaufbaus mindestens zwei Plasmaspritzanlagen zur Verfügung gestellt, eine Anlage zum Aufspritzten von Wärmedämmschichten mittels APS und eine Anlage zum Aufbringen von Wärmedämmschichten mittels PS-PVD.

Weiter umfasst die Erfindung ein Substrat oder Werkstück umfassend eine Substartoberfläche mit einem Wärmedämmschichtaufbau hergestellt mit einem Verfahren nach einem oder mehreren der oben beschriebenen Ausführungsformen und -varianten. Fig. 1 zeigt ein Ausführungsbeispiel eines Wärmedämmschichtaufbaus 2 gemäss vorliegender Erfindung, und Fig. 2 zeigt ein Ausführungsbeispiel eines Wärmedämmschichtsystems 1 mit einem Wärmedämmschichtaufbau gemäss vorliegender Erfindung. In beiden Ausführungsbeispielen enthält der Wärmedämmschichtaufbau mindestens zwei unterschiedlich hergestellte Wärmedämmschichten 2.1, 2.2, nämlich eine mittels APS aufgespritzte Wärmedämmschicht 2.1 und eine mittels PS-PVD aufgebracht Wärmedämmschicht 2.2, wobei die mittels PS-PVD aufgebrachte Wärmedämmschicht länglichen Korpuskeln enthält, die eine anisotrope Mikrostruktur bilden, und die im wesentlichen senkrecht zur Substratoberfläche ausgerichtet sind.

In den gezeigten Ausführungsbeispielen ist der Wärmedämmschichtaufbau auf einer Substratoberfläche 3 des Substrats oder Werkstücks aufgebracht. In einer typischen Ausführungsvariante ist das Substrat bzw. Werkstück und/oder die Substratoberfläche metallisch, wobei das Substrat bzw. Werkstück beispielsweise eine Turbinenschaufel aus einer Ni- oder Co-Legierung sein kann.

In dem in Fig. 2 gezeigten Ausführungsbeispiel ist zusätzlich zwischen dem Substrat und den Wärmedämmschichten 2.1, 2.2 eine Haftvermittlerschicht und/oder Heissgaskorrosionsschutzschicht 4 vorgesehen, zum Beispiel eine Schicht aus einem Metallaluminid wie NiAl oder PtAl oder einer Legierung des Typs MCrAlY mit M = Fe, Co, Ni oder eine Kombination von Ni und Co. Die Haftvermittlerschicht bzw. Heissgaskorrosionsschutzschicht 4 hat typisch eine Dicke zwischen 50 µm und 500 µm. Bei Bedarf kann zudem
- eine Sperrschicht von typisch 2 µm bis 30 µm Dicke zwischen dem Substrat und der Haftvermittlerschicht bzw. Heissgaskorrosionsschutzschicht 4 vorgesehen werden (nicht gezeigt in Fig. 2), wobei die Sperrschicht mit Vorteil metallisch ausgebildet ist, beispielsweise in Form einer intermetallischen Sperrschicht aus einer NiAl- oder NiCr- oder PtAl- oder PtNi-Legierung, und/oder
- es kann eine Schutzschicht von 0.02 µm bis 20 µm oder 0.03 µm bis 3 µm Dicke zwischen der Haftvermittlerschicht bzw. Heissgaskorrosionsschutzschicht 4 und den Wärmedämmschichten 2.1, 2.2 vorgesehen werden (nicht gezeigt in Fig. 2), wobei die Schutzschicht mit Vorteil als Oxidschicht ausgebildet ist, beispielsweise in Form einer Schutzschicht aus Al₂O₃ oder einer ternären Al-Zr-O-Verbindung.

Das Aufbringen der Sperrschicht und/oder Haftvermittlerschicht bzw. Heissgaskorrosionsschutzschicht 4 und/oder Schutzschicht kann, falls gewünscht, im Rahmen des Verfahrens zur Herstellung eines Wärmedämmschichtaufbaus erfolgen. In einer vorteilhaften Ausführungsform wird zunächst die Sperrschicht und/oder Haftvermittlerschicht bzw. Heissgaskorrosionsschutzschicht 4 und/oder Schutzschicht auf die Substratoberfläche 3 aufgebracht, beispielsweise mittels eines Plasmaspritzverfahrens oder eines anderen geeigneten Verfahrens, und der Wärmedämmschichtaufbau fortgesetzt, indem mindestens zwei unterschiedlich hergestellte Wärmedämmschichten 2.1, 2.2 aufgebracht werden.

Bei Bedarf kann, wie in Fig. 2 gezeigt, auf der obersten Wärmedämmschicht zusätzlich eine Glättungsschicht 5 vorgesehen sein, die zum Beispiel aus oxidkeramischem Material wie ZrO₂ oder SiO₂ bestehen und eine Dicke von typisch 1 µm bis 50 µm, vorzugsweise 2 µm bis 20 µm aufweisen kann. Häufig ist die Glättungsschicht aus dem gleichen Beschichtungsmaterial wie die Wärmedämmschichten hergestellt. Die Glättungsschicht kann mittels PS-PVD oder APS aufgebracht werden, indem beispielsweise eine oder mehrere Komponenten in fester, flüssiger und/oder gasförmiger Form in das Plasma oder in den Plasmastrahl injiziert werden.

Das oben beschriebene Verfahren zur Herstellung eines Wärmedämmschichtaufbaus auf einer Substratoberfläche, die zugehörigen Ausführungsformen und -varianten sowie das Substrat oder Werkstück mit einem derart hergestellten Wärmedämmschichtaufbau haben den Vorteil, dass der mit dem beschriebenen Verfahren hergestellte Wärmedämmschichtaufbau gegenüber einer gleich dicken herkömmlichen Wärmedämmschicht mit kolumnarer Mikrostruktur günstiger hergestellt werden kann, ohne dass dadurch die Temperaturwechselbeständigkeit des gesamten Wärmedämmschichtsystems beeinträchtigt wird.

## Patentansprüche

1. Verfahren zur Herstellung eines Wärmedämmschichtaufbaus (2) auf einer Substratoberfläche (3), wobei mittels Plasmaspritzen ein keramisches Beschichtungsmaterial auf die Substratoberfläche aufgebracht wird, **dadurch gekennzeichnet,**
**dass** der Wärmedämmschichtaufbau mindestens zwei unterschiedlich hergestellten Wärmedämmschichten (2.1, 2.2) enthält,
wobei zur Herstellung der einen Wärmedämmschicht (2.1) das Beschichtungsmaterial durch Plasmaspritzen bei Atmosphärendruck (Atmospheric Plasma Spraying oder kurz APS) in Form eines Pulverstrahls auf die Substratoberfläche aufgespritzt wird, und
wobei zur Herstellung der anderen Wärmedämmschicht (2.2) das Beschichtungsmaterial in einer Arbeitskammer bei einem Druck von weniger als 2000 Pa mittels Plasma Spraying - Physical Vapour Deposition oder kurz PS-PVD auf die Substratoberfläche aufgebracht wird, wobei das Beschichtungsmaterial als Pulver in ein den Pulverstrahl defokussierendes Plasma injiziert und dort teilweise oder vollständig verdampft wird, so dass auf der Substratoberfläche eine Schicht mit länglichen Korpuskeln entsteht, die eine anisotrope Mikrostruktur bilden, und die im wesentlichen senkrecht zur Substratoberfläche ausgerichtet sind.

2. Verfahren nach Anspruch 1, wobei die mittels APS aufgespritzte Wärmedämmschicht (2.1) eine Dicke von 20 µm bis 1000 µm, insbesondere 50 µm bis 800 µm, aufweist und in einer- oder mehreren Lagen aufgespritzt wird.

3. Verfahren nach einem der Ansprüche 1 oder 2, wobei die mittels PS-PVD aufgebrachte Wärmedämmschicht (2.2) eine Dicke von 20 µm bis 1000 µm, insbesondere 50 µm bis 800 µm aufweist und in einer oder mehreren Lagen aufgebracht wird.

4. Verfahren nach einem der Ansprüche 1 bis 3, wobei die einzelnen Lagen der mittels APS aufgespritzten Wärmedämmschicht (2.1) und/oder der mittels PS-PVD aufgebrachten Wärmedämmschicht (2.2) jeweils eine Dicke von 3 µm bis 20 µm, insbesondere jeweils eine Dicke von 4 µm bis 12 µm haben.

5. Verfahren nach einem der Ansprüche 1 bis 4, wobei auf der Substratoberfläche eine Abfolge von einer oder mehreren mittels APS aufgespritzten Wärmedämmschichten und einer oder mehreren mittels PS-PVD aufgebrachten Wärmedämmschichten erzeugt wird.

6. Verfahren nach einem der Ansprüche 1 bis 5, wobei als erste Wärmedämmschicht auf der Substratoberfläche eine mittels APS aufgespritzte Wärmedämmschicht aufgebracht wird, und/oder wobei als oberste Wärmedämmschicht eine mittels APS aufgespritzte Wärmedämmschicht aufgebracht wird.

7. Verfahren nach einem der Ansprüche 1 bis 6, wobei das keramische Beschichtungsmaterial zur Herstellung der Wärmedämmschichten (2.1, 2.2) oxidkeramische Komponenten enthält, und/der wobei das keramische Beschichtungsmaterial zur Herstellung der Wärmedämmschichten aus stabilisiertem Zirkonoxid, insbesondere mit Yttrium, Cer, Gadolinium, Dysprosium oder anderen Seltenerden stabilisiertem Zirkonoxid, besteht und/oder stabilisiertes Zirkonoxid, insbesondere mit Yttrium, Cer, Gadolinium, Dysprosium oder anderen Seltenerden stabilisiertes Zirkonoxid, als Bestandteil enthält.

8. Verfahren nach einem der vorangehenden Ansprüche, wobei zusätzlich eine oder mehrere der folgenden Funktionsschichten aufgebracht werden:
- vor dem Aufbringen der Wärmedämmschichten eine metallische Sperrschicht, insbesondere eine intermetallische Sperrschicht von 2 µm bis 30 µm Dicke aus einer NiAl- oder NiCr- oder PtAl- oder PtNi-Legierung,
- vor dem Aufbringen der Wärmedämmschichten eine Haftvermittlerschicht und/oder Heissgaskorrosionsschutzschicht 4, insbesondere eine Schicht 50 µm bis 500 µm Dicke aus einer Legierung des Typs MCrAlY mit M = Fe, Co, Ni oder NiCo,
- vor dem Aufbringen der Wärmedämmschichten eine oxidkeramische Schutzschicht, insbesondere eine Schutzschicht von 0.02 µm bis 20 µm oder 0.03 µm bis 3 µm Dicke aus Al₂O₃ oder einer ternären Al-Zr-O-Verbindung,
- nach dem Aufbringen der Wärmedämmschichten eine Glättungsschicht 5, insbesondere eine Glättungsschicht von 2 µm bis 50 µm Dicke aus oxidkeramischem Beschichtungsmaterial und/oder aus dem gleichen Beschichtungsmaterial wie die Wärmedämmschichten.

9. Verfahren nach einem der vorangehenden Ansprüche, wobei zur Herstellung des Mehrschicht-Wärmedämmsystems mindestens zwei Plasmaspritzanlagen zur Verfügung gestellt werden, eine Anlage zum Aufspritzten von Wärmedämmschichten mittels APS und eine Anlage zum Aufbringen von Wärmedämmschichten mittels PS-PVD.

10. Substrat oder Werkstück umfassend eine Substartoberfläche (3) mit einem Wärmedämmschichtaufbau (2) hergestellt mit einem Verfahren nach einem der Ansprüche 1 bis 9, der mindestens zwei unterschiedlich hergestellte Wärmedämmschichten (2.1, 2.2) enthält, nämlich eine mittels APS aufgespritzte Wärmedämmschicht (2.1) und eine mittels PS-PVD aufgebracht Wärmedämmschicht (2.2), wobei die mittels PS-PVD aufgebrachte Wärmedämmschicht länglichen Korpuskeln enthält, die eine anisotrope Mikrostruktur bilden, und die im wesentlichen senkrecht zur Substratoberfläche ausgerichtet sind.
